## Europäisches Patentamt
## European Patent Office
## Office européen des brevets

(19)

(11) Veröffentlichungsnummer : **0 212 182**
**B1**

(12) **EUROPÄISCHE PATENTSCHRIFT**

(45) Veröffentlichungstag der Patentschrift :
26.04.89

(51) Int. Cl.⁴ : **F 16 H   3/18**

(21) Anmeldenummer : 86109168.4

(22) Anmeldetag : 04.07.86

(54) **Gangschaltgetriebe für ein Kraftfahrzeug.**

(30) Priorität : 22.08.85 DE 3530017

(43) Veröffentlichungstag der Anmeldung :
04.03.87 Patentblatt 87/10

(45) Bekanntmachung des Hinweises auf die Patenterteilung : 26.04.89 Patentblatt 89/17

(84) Benannte Vertragsstaaten :
DE FR GB IT NL SE

(56) Entgegenhaltungen :
EP--A-- 0 040 864
AU--B--   76 233
DE--A-- 2 941 062
FR--A-- 2 180 679
FR--A-- 2 393 986
US--A-- 3 733 912
US--A-- 3 916 712
US--A-- 4 509 381
VDI-Berichte 466, 1983, VDI-Verlag, Düsseldorf, "Elektronische Regelung eines Doppelkupplungs-Getriebes", S. 101-108

(73) Patentinhaber : **Dr.Ing.h.c. F. Porsche Aktiengesellschaft**
**Porschestrasse 42**
**D-7000 Stuttgart 40 (DE)**

(72) Erfinder : **Bardoll, Meinrad**
**Hindenburgstrasse 36**
**D-7251 Weissach (DE)**

# EP 0 212 182 B1

## Beschreibung

Die Erfindung betrifft ein Gangschaltgetriebe für ein Kraftfahrzeug nach dem Oberbegriff des Anspruchs 1.

Derartige Gangschaltgetriebe mit zwei Eingangswellen, einer Zentralwelle und einer auf ihr gelagerten Hohlwelle werden hauptsächlich für Doppelkupplungsgetriebe verwendet, wie sie in « VDI-Berichte, Nr. 466, 1983, S. 101 bis 108 » beschrieben sind. Hierbei ist die Zentralwelle, mit der der erste, dritte und fünfte Gang betrieben werden, mit der einen Kupplungsscheibe einer Doppelkupplung, die Hohlwelle zum Antrieb des zweiten, vierten und Rückwärtsgangs mit der anderen Kupplungsscheibe verbunden. Nach Betätigen einer Kupplungsscheibe steht die zugehörige Gruppe von Getriebegängen für den Antrieb zur Verfügung. Die Getriebegänge bestehen jeweils aus einem Festrad und einem mit ihm kämmenden Losrad, von denen das eine auf einer der Eingangswellen, das andere auf der hierzu parallelen Abtriebswelle angeordnet ist. Zum Einlegen eines Ganges wird in bekannter Weise das Losrad mittels einer Synchronisierkupplung mit der zugehörigen Welle drehfest verbunden. Dieses Getriebe gestattet eine Umschaltung von einem Getriebegang der einen Eingangswelle auf einen Getriebegang der anderen Eingangswelle, ohne daß eine Zugkraftunterbrechung eintritt. Problematisch ist allerdings die Lagerung der Eingangswellen sowie die Montage der Zahnradsätze, insbesondere dann, wenn im selben Getriebegehäuse wahlweise ein Fünf- oder ein Sechsganggetriebe untergebracht werden soll.

Die Aufgabe der Erfindung besteht darin, die Getriebegänge den Wellen so zuzuordnen und die Lagerstellen der Wellen so anzuordnen, daß deren Lagerung mit geringstmöglicher Wellendurchbiegung und eine einfache Montierbarkeit gewährleistet sind. Zur Lösung dieser Aufgabe dienen die kennzeichnenden Merkmale des Anspruchs 1.

Im Getriebegehäuse ist die erste Gruppe von Getriebegängen auf der einen Seite, die zweite Gruppe von Getriebegängen auf der anderen Seite einer Zwischenplatte angeordnet, in der die Zentralwelle gelagert ist. Daher kann das endseitige Lager der Hohlwelle auf der Zentralwelle so nahe an die Zwischenplatte gelegt werden, daß die Lagerkraft auf kürzestem Weg abgestützt ist und die Wellendurchbiegung sehr gering wird.

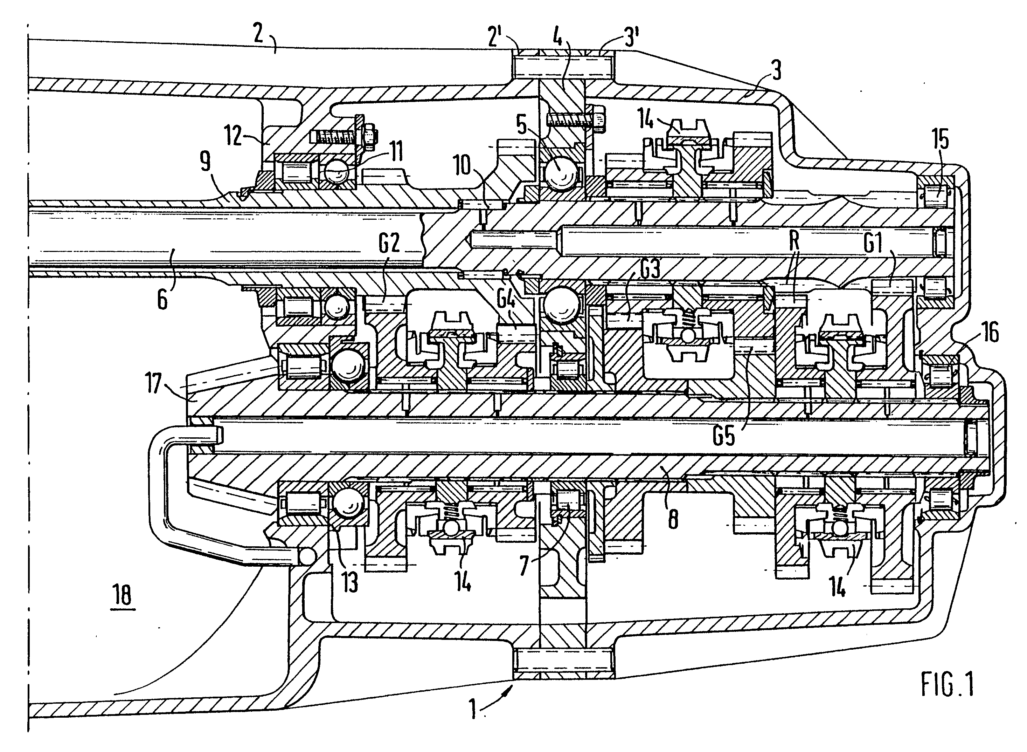

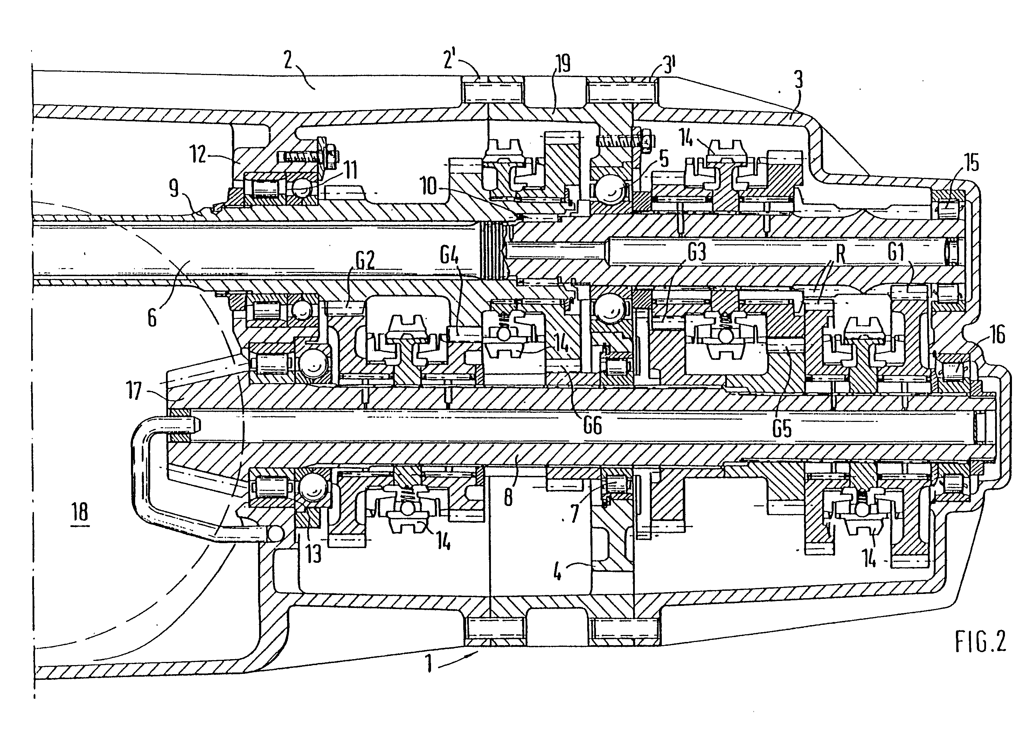

Diese Anordnung macht es möglich, mit einer maximalen Anzahl von Gleichteilen wahlweise ein Fünfganggetriebe, das in Fig. 1 dargestellt ist, oder ein Sechsganggetriebe nach Fig. 2 zu erstellen.

Das Fünfganggetriebe nach Fig. 1 ist von einem Getriebegehäuse 1 umschlossen, das aus einem Achsgehäuse 2 und einer an ihm angeflanschten Gehäuseglocke 3 besteht, wobei zwischen die beiden Flansche 2' und 3' eine Zwischenplatte 4 eingesetzt ist. Die Zwischenplatte 4 enthält ein Lager 5 für eine Zentralwelle 6 sowie ein Lager 7 für eine parallelliegende Abtriebswelle 8. Auf der Zentralwelle 6 ist eine Hohlwelle 9 gelagert, deren endseitiges Lager 10 nahe zur Zwischenplatte 3 angeordnet ist. Das zweite Lager 11 der Hohlwelle 9 sitzt in einer Lagerplatte 12, die am Achsegehäuse 2 angegossen ist und auch ein Lager 13 für die Abtriebswelle 8 enthält.

Zwischen der Lagerplatte 12 und der Zwischenplatte 4 befinden sich die Zahnradpaare für den zweiten Getriebegang G2 und den vierten Getriebegang G4, wobei die FeBräder dieser Getriebegänge auf die Hohlwelle 9 gefräst sind, die Losräder auf der Abtriebswelle 8 gelagert und mittels einer Synchronisierkupplung 14 mit ihr verbindbar sind.

Die Zahnräder für den dritten Gang G3, den fünften Gang G5, den Rückwärtsgang R und den ersten Gang G1 sind in dieser Reihenfolge jenseits der Zwischenplatte 4 angeordnet und von der Gehäuseglocke 3 umschlossen, die in ihrem Bodenteil ein endseitiges Lager 15 für die Zentralwelle 6 und ein endseitiges Lager 16 für die Abtriebswelle 8 enthält. Am anderen Ende ist die Abtriebswelle 8 mit einem Kegelrad 17 versehen, das in ein Tellerrad 18 eingreift und den Achsantrieb bewirkt. Die Losräder des dritten Ganges G3 und fünften Ganges G5 sind auf der Zentralwelle 6 bzw. auf einer mit ihr drehfest verbundenen Lagerhülse 20 gelagert; die FeBräder dieser Getriebegänge sind auf einem Kerbzahnprofil der Abtriebswelle 8 befestigt. Die Losräder des ersten Ganges G1 und des Rückwärtsganges R sind auf der Abtriebswelle gelagert; die FeBräder dieser Getriehegänge sind auf die Zentralwelle 6 gefräst.

Diese Gruppe von Getriebegängen bleibt unverändert erhalten, wenn aus dem Fünfganggetriebe ein Sechsganggetriebe gemacht wird, wie es Fig. 2 zeigt. Hierbei ist zwischen die Flansche 2' und 3' des Achsgehäuses 2 und der Gehäuseglocke 3 ein Zwischengehäuse 19 geschraubt, an dem die Zwischenplatte 4 angegossen ist. Die Hohlwelle 9 und die Abtriebswelle 8 sind verlängert, um nahe der Zwischenplatte 4 einen sechsten Getriebegang G6 mit Synchronisierkupplung 14 unterbringen zu können, wobei das Losrad von G6 auf der Hohlwelle 9 gelagert ist und das Festrad auf der Abtriehswelle 8 drehfest ist.

## Patentansprüche

1. Gangschaltgetriebe für ein Kraftfahrzeug, mit einer im Getriebegehäuse (1) zweifach gelagerten Zentralwelle (6) zum Antrieb einer ersten Gruppe von Getriebegängen und einer auf der Zentralwelle gelagerten, kürzeren Hohlwelle (9) zum Antrieb einer zweiten Gruppe von Getriebegängen, wobei die Zentralwelle und Hohlwelle wechselweise angetrieben sind und jeder aus einem Festrad und einem Losrad gebildete Getriebegang aus einem auf der Hohlwelle bzw. Zentralwelle angeordneten Zahnrad und einem mit ihm kämmenden Zahnrad einer zur Zentralwelle parallelen Abtriebswelle (8) besteht, von deren Stirnseite ein Achsantrieb (17) ausgeht, dadurch gekennzeichnet, daß die erste Gruppe von Getriebegängen (G3, G5, R, G1) auf der einen Seite, die zweite Gruppe von Getriebegängen (G2, G4, G6) sowie ein endseitiges Lager (10) der Hohlwelle (9) auf der Zentralwelle (6) an der anderen Seite einer Zwischenplatte (4) des Getriebegehäuses (1) angeordnet sind, die das eine Lager (5) der Zentralwelle (6) und ein Lager (7) der Abtriebswelle (8) enthält, wobei eine Trennebene des zweiteilig oder dreiteilig ausgeführten Getriebegehäuses (1) im Bereich der Zwischenplatte (4) zu ihr parallel verläuft.

2. Gangschaltgetriebe nach Anspruch 1, dadurch gekennzeichnet, daß das andere Lager (15) der Zentralwelle (6) und ein endseitiges Lager (16) der Abtriebswelle (8) in einer Gehäuseglocke (3) untergebracht sind, die die erste Gruppe von Getriebegängen (G3, R, G1) umschließt und zusammen mit der Zwischenplatte (4) an ein Achsgehäuse (2) angeflanscht ist.

3. Gangschaltgetriebe nach Anspruch 1, dadurch gekennzeichnet, daß die Zwischenplatte (4) an einem Zwischengehäuse (19) angegossen ist, das zusammen mit dem daran angeflanschten Achsgehäuse (2) die zweite Gruppe von Getriebegängen (G2, G4, G6) sowie einen aus einem Kegelrad (17) und einem Tellerrad (18) bestehenden Achsantrieb umschließt.

4. Gangschaltgetriebe nach Anspruch 3, dadurch gekennzeichnet, daß am Achsgehäuse (2) eine Lagerplatte (12) angegossen ist, die ein zweites Lager (11) für die Hohlwelle (9) und ein drittes Lager (13) für die Abtriebswelle (8) enthält.

5. Gangschaltgetriebe nach Anspruch 1, dadurch gekennzeichnet, daß die erste Gruppe von Getriebegängen (G3, G5, R, G1) aus dem dritten, fünften, Rückwärtsgang und ersten Gang besteht, die in dieser Reihenfolge von der Zwischenplatte (4) aus auf der Zentralwelle (6) angeordnet sind.

6. Gangschaltgetriebe nach Anspruch 1, dadurch gekennzeichnet, daß für ein Sechsganggetriebe die Losräder des zweiten, vierten, ersten und Rückwärtsganges auf der Abtriebswelle (8), das Losrad des sechsten Ganges auf der Hohlwelle (9), die Losräder des dritten und fünften Ganges auf der Zentralwelle (6) gelagert sind und daß alle Losräder jeweils mit ihren zugehörigen Wellen durch Synchronisierkupplungen (14) verbindbar sind.

7. Gangschaltgetriebe nach einem der Ansprüche 1 bis 6, dadurch gekennzeichnet, daß das Zwischengehäuse (19) und das Achsgehäuse (2) sowie der Abstand der Lagerplatte (12) zur Zwischenplatte (4) so bemessen sind, daß in das Getriebegehäuse wahlweise ein Sechsgang- oder Fünfganggetriebe einsetzbar ist.

## Claims

1. Transmission for a motor vehicle, with a central shaft (6) mounted twice in the transmission housing (1) for driving a first group of gears and a shorter hollow shaft (9) mounted on the central shaft for driving a second group of gears, the central shaft and hollow shaft being driven alternately and each gear formed from a fixed wheel and a free wheel comprising a gear located on the hollow shaft or central shaft and a gear meshing therewith of an output shaft (8) parallel to the central shaft, from the end face of which output shaft (8) starts an axle drive (17), characterised in that the first group of gears (G3, G5, R, G1) is located on one side, the second group of gears (G2, G4, G6) and an end bearing (10) of the hollow shaft (9) on the central shaft (6) are located on the other side of an intermediate plate (4) of the transmission housing (1), which contains one bearing (5) of the central shaft (6) and a bearing (7) of the output shaft (8), a plane of separation of the transmission housing (1) constructed in two or three parts extending parallel to the intermediate plate (4) in the region thereof.

2. Transmission according to Claim 1, characterised in that the other bearing (15) of the central shaft (6) and an end bearing (16) of the output shaft (8) are located in a housing cover (3), which encloses the first group of gears (G3, R, G1) and together with the intermediate plate (4) is flange-mounted on an axle box (2).

3. Transmission according to Claim 1, characterised in that the intermediate plate (4) is cast on an intermediate housing (19), which together with the axle box (2) flange-mounted thereon encloses the second group of gears (G2, G4, G6) and an axle drive consisting of a bevel gear (17) and a spur bevel gear (18).

4. Transmission according to Claim 3, characterised in that a bearing plate (12) is cast on the axle box (2), which plate contains a second bearing (11) for the hollow shaft (9) and a third bearing (13) for the output shaft (8).

5. Transmission according to Claim 1, characterised in that the first group of gears (G3, G5, R, G1) consists of the third, fifth, reverse and first gear, which are located in this sequence from the intermediate plate (4) to the central shaft (6).

6. Transmission according to Claim 1, characterised in that for a six-speed transmission, the free wheels of the second, fourth, first and reverse gear are mounted on the output shaft (8), the free wheel of the sixth gear is mounted on the hollow shaft (9), the free wheels of the third and fifth gear are mounted on the central shaft (6) and that all free wheels can each be connected to their associated shafts by synchronising couplings (14).

7. Transmission according to one of Claims 1 to 6, characterised in that the intermediate housing (19) and the axle box (2) as well as the distance of the bearing plate (12) from the intermediate plate (4) are dimensioned so that optionally a sixspeed or five-speed transmission can be inserted in the transmission housing.

## Revendications

EP 0 212 182 B1

1. Boîte de vitesses pour automobile, comportant un arbre central (6) placé avec un double appui dans le carter de boîte de vitesse (1) pour l'entraînement d'un premier groupe de vitesses et un arbre creux (9) plus court, placé sur l'arbre central, pour l'entraînement d'un second groupe de vitesses, l'arbre central et l'arbre creux étant entraînés alternativement et chaque vitesse constituée par un pignon fixe et un pignon fou comprenant un pignon placé sur l'arbre creux ou l'arbre central et un pignon engrénant avec lui d'un arbre de sortie (8) parallèle à l'arbre central, à partir de la face frontale duquel a lieu un entraînement (17) des essieux, caractérisée en ce que le premier groupe de vitesses (G3, G5, R, G1) est placé d'un côté, le second groupe de vitesses (G2, G4, G6), ainsi qu'un palier en bout (10) de l'arbre creux (9) sur l'arbre central (6), de l'autre côté d'une plaque intermédiaire (4) du carter de boîte de vitesse (1), qui contient un palier (5), de l'arbre central (6) et un palier (7) de l'arbre de sortie (8), un plan de séparation du carter de boîte de vitesses (1) en deux ou trois parties s'étendant dans la zone de la plaque intermédiaire (4), parallèlement à elle.

2. Boîte de vitesses selon la revendication 1, caractérisée en ce que l'autre palier (15) de l'arbre central (6) et un palier en bout (16) de l'arbre de sortie (8) sont logés dans une calotte de carter (3) qui entoure le premier groupe de vitesses (G3, R, G1) et est fixée par brides, avec la plaque intermédiaire (4), à un carter d'essieu (2).

3. Boîte de vitesses selon la revendication 1, caractérisée en ce que la plaque intermédiaire (4) est coulée sur un carter intermédiaire (19) qui entoure, avec le carter d'essieu (2) qui y est fixé par brides, le second groupe de vitesses (G2, G4, G6), ainsi qu'un entraînement d'essieu comprenant un pignon conique (17) et une couronne de différentiel (18).

4. Boîte de vitesses selon la revendication 1, caractérisée en ce qu'une plaque d'appui (12) est coulée sur le carter d'essieu (2), laquelle comprend un second palier (11) pour l'arbre creux (9) et un troisième palier (13) pour l'arbre de sortie (8).

5. Boîte de vitesses selon la revendication 1, caractérisée en ce que le premier groupe de vitesses (G3, G5, R, G1) comprend la troisième vitesse, la cinquième vitesse, la marche arrière et la première vitesse, qui sont disposées sur l'arbre central (6), dans cet ordre, à partir de la plaque intermédiaire (4).

6. Boîte de vitesses selon la revendication 1, caractérisée en ce que, pour une boîte à six vitesses, les pignons fous des seconde, quatrième, première vitesses et de la marche arrière sont disposés sur l'arbre de sortie (8), le pignon fou de la sixième vitesse sur l'arbre creux (9), les pignons fous des troisième et cinquième vitesses sur l'arbre central (6), et en ce que tous les pignons fous peuvent être reliés chacun aux arbres qui leur correspondent par des accouplements de synchronisation (14).

7. Boîte de vitesses selon l'une quelconque des revendications 1 à 6, caractérisée en ce que le carter intermédiaire (19) et le carter d'essieu (2), ainsi que la distance de la plaque d'appui (12) à la plaque intermédiaire (4), sont calculés de façon qu'on puisse introduire à volonté une boîte à six ou à cinq vitesses dans le carter de boîte de vitesses.

FIG.1

EP 0 212 182 B1

FIG.2